# EUROPEAN PATENT APPLICATION

(11) **EP 1 933 479 A1**
(43) Date of publication of application: **18.06.2008**
(21) Application number: 07022769.9
(22) Date of filing: 23.11.2007
(51) Int. Cl.: H04B 10/155

(54) **Two-stage optical modulator with timing alignment of the modulator stages**

(30) Priority: 24.11.2006 JP 2006316423
(71) Applicant: Yokogawa Electric Corporation, Musashino-shi Tokyo 180-89750 (JP)
(72) Inventor: Miura, Akira, Musashino-shi Tokyo 180-8750 (JP); Uchida, Kenji, Musashino-shi Tokyo 180-8750 (JP); Izuka, Masahiro, Musashino-shi Tokyo 180-8750 (JP); Kodaka, Hirotoshi, Musashino-shi Tokyo 180-8750 (JP); Yakihara, Tsuyoshi, Musashino-shi Tokyo 180-8750 (JP); Ikezawa, Katsuya, Musashino-shi Tokyo 180-8750 (JP); Tanimura, Daisuke, Musashino-shi Tokyo 180-8750 (JP); Sato, Chie, Musashino-shi Tokyo 180-8750 (JP); Tezuka, Kentaro, Musashino-shi Tokyo 180-8750 (JP); Wada, Morio, Musashino-shi Tokyo 180-8750 (JP)
(74) Representative: Grünecker, Kinkeldey, Stockmair & Schwanhäusser Anwaltssozietät

(57) **Abstract**

A light modulating apparatus which is to be used in a transmission system using wavelength division multiplexing has: a signal generating section for producing a transmission signal and the like; a first light modulating section for modulating light emitted from a light source, on the basis of the transmission signal; a variable phase shifter which changes a phase of a light quantity control signal; a second light modulating section for modulating a light signal emitted from the first light modulating section, on the basis of an output of the variable phase shifter; a branching section for branching a light signal emitted from the second light modulating section, into an output light signal and an electric signal; and an analysis controlling section for sampling the electric signal, controlling the variable phase shifter on the basis of sampled data, and adjusting a timing of the modulation in the second light modulating section.

## Description

This application claims priority to Japanese Patent Application No. 2006-316423, filed November 24, 2006, in the Japanese Patent Office. The priority application is incorporated by reference in its entirety.

### TECHNICAL FIELD

The present disclosure relates to a light modulating apparatus used in a transmission system using WDM (Wavelength Division Multiplexing), and particularly to a light modulating apparatus in which a delay in an optical transmission path between light modulators caused by a temperature change or a change with age, or an electrical delay in a driver is adequately compensated, and high reliability can be maintained.

### RELATED ART

Recently, in accordance with the progress of the optical communication system, a light modulating apparatus which can stably emit a light signal that is modulated with a high frequency is requested. For example, light modulating apparatuses such as an EA (Electro Absorption) modulator (hereinafter, referred to simply as EA modulator), and an LN (Lithium Niobate) modulator (hereinafter, referred to simply as LN modulator) in which lithium niobate (LiNbO₃) having an electrooptic effect (Pockels effect) is used as a substrate are put to practical use.

As prior art technical references related to a related-art light modulating apparatus, there are the following references.

[Patent Reference 1] Japanese Patent Unexamined Publication No. 2003-279912
[Patent Reference 2] Japanese Patent Unexamined Publication No. 2003-283432
[Patent Reference 3] Japanese Patent No. 3,723,358

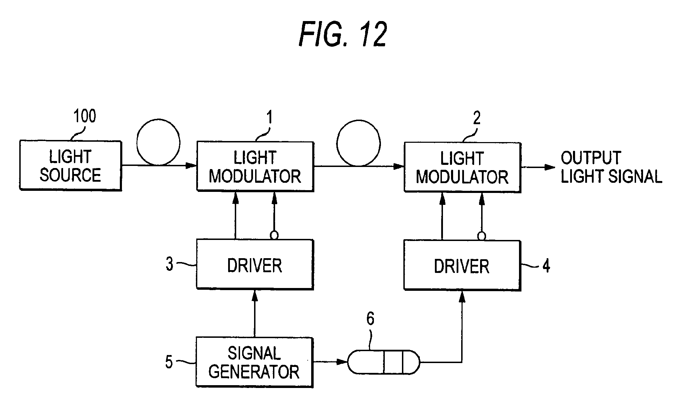

Fig. 12 is a configuration block diagram showing an example of such a related-art light modulating apparatus. In Fig. 12, 1 and 2 denote light modulators which modulate and emit light, 3 denotes a driver which drives the light modulator 1, 4 denotes a driver which drives the light modulator 2, 5 denotes a signal generator, 6 denotes a phase shifter, and 100 denotes a light source.

Light emitted from the light source 100 is incident on an incident end of the light modulator 1, and light emitted from an emission end of the light modulator 1 is incident on an incident end of the light modulator 2. In this case, optical fibers or optical transmission paths are used in the connections between the light source 100 and the light modulator 1, and the light modulators 1 and 2. An output light signal is emitted from an emission end of the light modulator 2.

A transmission signal output terminal of the signal generator 5 is connected to an input terminal of the driver 3. A non-inverting output terminal of the driver 3 is connected to one of RF (Radio Frequency) input terminals of the light modulator 1, and an inverting output terminal of the driver 3 is connected to the other RF input terminal of the light modulator 1.

A light quantity control signal output terminal of the signal generator 5 is connected to an input terminal of the phase shifter 6, and an output terminal of the phase shifter 6 is connected to an input terminal of the driver 4. A non-inverting output terminal of the driver 4 is connected to one of RF input terminals of the light modulator 2, and an inverting output terminal of the driver 4 is connected to the other RF input terminal of the light modulator 2.

Hereinafter, the operation of the related-art example shown in Fig. 12 will be described. By means of a known modulating method including: OOK (On Off Keying) amplitude modulation such as NRZ (Non Return to Zero); PSK phase modulation such as BPSK (Binary Phase Shift Keying), DPSK (Differential Phase Shift Keying), or DQPSK (Differential Quadrature Phase Shift Keying); and Duo Binary, the light modulator 1 superimposes transmission information on light.

The light modulator 2 controls the light quantity by means of modulation such as RZ or CSRZ (Carrier Suppressed Return to Zero). The light quantity is modulated because of reasons such as that the quantity of light to be transmitted through an optical fiber is not increased more than necessary.

In WDM, light signals of different wavelengths are multiplexed and then transmitted through one optical fiber. When the light powers of the wavelengths are high, the waveform during transmission is distorted by the nonlinear effect. Therefore, it is desired that the light power at a timing which takes no part in data reproduction, i.e., in a transition portion between data be reduced.

With respect to the light emitted from the light source 100, usually, the order of the two modulations is not important. Namely, the modulation with transmission information may be first performed and then that with the light quantity may be performed, or alternatively the modulation with the light quantity may be first performed and then that with transmission information may be performed.

As the light modulators, an LN (Lithium Niobate) modulator, or an EA (Electro Absorption) modulator may be used. In the following description will be made with assuming that, in the related-art example shown in Fig. 12, LN modulators are used as the light modulators 1 and 2, and the transmission is performed by the RZ-DPSK modulation method.

The RZ-DPSK modulation method is a modulation method in which light is DPSK modulated and the modulated light is further RZ modulated, or in which light is RZ modulated and the modulated light is further DPSK modulated.

The signal generator 5 outputs an NRZ signal to the driver 3, as the transmission signal. The driver 3 amplifies the amplitude of the NRZ signal, and outputs a differential voltage in which the one-side amplitude is "V_{π}". The light modulator 1 which is previously biased to the NULL point of the modulation characteristics DPSK modulates continuous non-modulated light supplied from the light source 100, and emits the DPSK modulated light to the light modulator 2.

Then, the signal generator 5 outputs a light quantity control signal to the phase shifter 6. The light quantity control signal is synchronized with the NRZ signal which is the transmission signal, and is often a sinusoidal wave in a usual case. The delay time in the phase shifter 6 is previously adjusted in the production step.

The light quantity control signal in which the timing is adjusted by the phase shifter 6 is input to the driver 4. The driver 4 amplifies the amplitude of the light quantity control signal, and outputs a differential voltage in which the one-side amplitude is "V_{π}/2". The light modulator 2 which is previously biased to the QUAD point of the modulation characteristics RZ modulates the DPSK modulated light supplied from the light modulator 1, and emits the RZ-DPSK modulated light as the output light signal.

As a result, the transmission signal output from the signal generator 5 is amplified by the driver 3, and the light from the light source is DPSK modulated by the light modulator 1 on the basis of the amplified signal. Then, the light quantity control signal in which the timing is adjusted by the phase shifter 6 is amplified by the driver 4, and the DPSK modulated light supplied from the light modulator 1 is RZ modulated by the light modulator 2 on the basis of the amplified signal. Therefore, it is possible to emit the output light signal in which the operation timing between the light modulators 1 and 2 is optimum.

In the related-art example shown in Fig. 12, the delay time in the phase shifter 6 is previously adjusted in the production step. In an operation of several hours, therefore, it is seldom that the operation timings of the light modulators are problematic.

In the control on the phase shifter 6, however, an open-loop control is performed, namely a feedback based on the waveform quality of the output light signal cannot be performed. Therefore, deviation of the operation timing between the light modulators due to a temperature change caused by the seasonal transformation or a change with age of the optical fiber or the devices for several years must be adjusted in each case, thereby producing a problem in that the reliability is low.

### SUMMARY

Exemplary embodiments of the present invention provide a light modulating apparatus which is used in a transmission system using WDM, and in which a delay in an optical transmission path between light modulators caused by a temperature change or a change with age, or an electrical delay in a driver is adequately compensated by a closed loop control, and high reliability can be maintained.

(1) According to one or more embodiments of the present invention, the light modulating apparatus is a light modulating apparatus which is to be used in a transmission system using wavelength division multiplexing, wherein the apparatus comprises:
   a signal generating section for producing a transmission signal, a light quantity control signal, and a sampling pulse; a first light modulating section for modulating light emitted from a light source, on the basis of the transmission signal; a variable phase shifter which changes a phase of the light quantity control signal; a second light modulating section for modulating a light signal emitted from the first light modulating section, on the basis of an output of the variable phase shifter; a branching section for branching a light signal emitted from the second light modulating section, into an output light signal and an electric signal; and an analysis controlling section for sampling the electric signal in synchronization with the sampling pulse, controlling the variable phase shifter on the basis of sampled data, and adjusting a timing of the modulation in the second light modulating section, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(2) The light modulating apparatus is a light modulating apparatus which is to be used in a transmission system using wavelength division multiplexing, wherein the apparatus comprises:
   a signal generating section for producing a transmission signal, a light quantity control signal, and a sampling pulse; a first light modulating section for modulating light emitted from a light source, on the basis of the light quantity control signal; a variable phase shifter which changes a phase of the transmission signal; a second light modulating section for modulating a light signal emitted from the first light modulating section, on the basis of an output of the variable phase shifter; a branching section for branching a light signal emitted from the second light modulating section, into an output light signal and an electric signal; and an analysis controlling section for sampling the electric signal in synchronization with the sampling pulse, controlling the variable phase shifter on the basis of sampled data, and adjusting a timing of the modulation in the second light modulating section, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(3) In the light modulating apparatus of (1) or (2), the signal generating section includes:
   a signal generator which produces the transmission signal, the light quantity control signal, and a sampling start signal; and a sampling pulse generator which generates the sampling pulse on the basis of the sampling start signal, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(4) In the light modulating apparatus of any one of (1) to (3), each of the first and second light modulating section includes:
   a driver which amplifies an input signal; and a light modulator which is driven by the driver, and which modulates light, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(5) In the light modulating apparatus of any one of (1) to (4), the branching section includes:
   an optical coupler which branches an incident light signal, and which emits one emitted light as the output light signal; and an optical/electrical converter which converts the other emitted light of the optical coupler to the electric signal, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(6) In the light modulating apparatus of any one of (1) to (5), the analysis controlling section includes:
   a sampling device which samples an input signal in synchronization with the sampling pulse; a phase controlling device which controls the variable phase shifter; and a waveform analyzing device which controls the phase controlling device on the basis of the data sampled by the sampling device, and which adjusts the timing of the modulation in the second light modulating section, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(7) In the light modulating apparatus of (3), the sampling pulse generator generates the sampling pulse on the basis of the transmission signal, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(8) In the light modulating apparatus of (3), the sampling pulse generator generates the sampling pulse on the basis of the light quantity control signal, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(9) In the light modulating apparatus of (6), the waveform analyzing device
   compares jitter at a rise of a waveform obtained on the basis of the data sampled by the sampling device, with jitter at a fall, if the jitter at the rise is larger than the jitter at the fall, determines that the timing of the modulation in the second light modulating section is early, and controls the phase controlling device so that the timing of the modulation becomes later, and, if the jitter at the fall is larger than the jitter at the rise, determines that the timing of the modulation in the second light modulating section is late, and controls the phase controlling device so that the timing of the modulation becomes earlier, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(10) In the light modulating apparatus of (6), the waveform analyzing device
   if a valley immediately preceding a small peak which succeeds a peak of a maximum value of a waveform obtained on the basis of the data sampled by the sampling device is wider than a valley in a case of a coincident timing of the modulation, determines that the timing of the modulation in the second light modulating section is early, and controls the phase controlling device so that the timing of the modulation becomes later, and, if a valley immediately succeeding a small peak which succeeds a peak of a maximum value of a waveform obtained on the basis of the data sampled by the sampling device is wider than a valley in a case of a coincident timing of the modulation, determines that the timing of the modulation in the second light modulating section is late, and controls the phase controlling device so that the timing of the modulation becomes earlier, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(11) In the light modulating apparatus of (6), the waveform analyzing device
   obtains a time of an apex of a peak of a waveform obtained on the basis of the data sampled by the sampling device, compares the time with a time in a case of a coincident timing of the modulation in the second light modulating section, if the time of the apex of the peak of the waveform is earlier, determines that the timing of the modulation in the second light modulating section is early, and controls the phase controlling device so that the timing of the modulation becomes later, and, if the time of the apex of the peak of the waveform is later, determines that the timing of the modulation in the second light modulating section is late, and controls the phase controlling device so that the timing of the modulation becomes earlier, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

(12) In the light modulating apparatus of (6), the waveform analyzing device
   Fourier transforms the data sampled by the sampling device, obtains a spectrum intensity and phase information, compares the spectrum intensity and phase information with a spectrum intensity and phase information in a case of a coincident timing of the modulation in the second light modulating section, if an intensity of a main spectrum is small and a principal sideband leads in phase, determines that the timing of the modulation in the second light modulating section is early, and controls the phase controlling device so that the timing of the modulation becomes later, and, if the intensity of the main spectrum is small and the principal sideband lags in phase, determines that the timing of the modulation in the second light modulating section is late, and controls the phase controlling device so that the timing of the modulation becomes earlier, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.

According to the invention, the following effects are attained.
In the inventions of (1), (2), (3), (4), (5), (6), (7), (8), (9), (10), (11), and (12), the optical coupler branches the output light signal emitted from the second modulatorsection, the O/E converter converts the light signal to the electric signal, the data sampled by the sampling device are analyzed by the waveform analyzing device, and the variable phase shifter is controlled by the phase controlling device on the basis of a result of the analysis, whereby the timing between the light modulators is always adjusted. Therefore, a delay in an optical transmission path between light modulators caused by a temperature change or a change with age, or an electrical delay in a driver is adequately compensated by a closed loop control, and high reliability can be maintained.
Other features and advantages may be apparent from the following detailed description, the accompanying drawings and the claims.

### BRIEF DESCRIPTION OF THE DRAWINGS

Fig. 1 is a configuration block diagram showing an embodiment of the light modulating apparatus of the invention.
Fig. 2 is a characteristic diagram showing a time-axis waveform of the intensity of a DPSK light signal emitted from a light modulator.
Fig. 3 is a characteristic diagram showing overwriting of the time-axis waveform of the intensity of the DPSK light signal emitted from the light modulator.
Fig. 4 is a characteristic diagram showing a time-axis waveform of the intensity of an RZ light signal.
Fig. 5 is a characteristic diagram showing overwriting of the time-axis waveform of the intensity of the RZ light signal.
Fig. 6 is a characteristic diagram showing a time-axis waveform of the intensity of an RZ-DPSK light signal emitted from a light modulator.
Fig. 7 is a characteristic diagram showing overwriting of the time-axis waveform of the intensity of the RZ-DPSK light signal emitted from the light modulator.
Fig. 8 is a characteristic diagram showing a time-axis waveform of the intensity of the RZ-DPSK light signal emitted from the light modulator in the case where the timing of RZ modulation is early by 2 ps.
Fig. 9 is a characteristic diagram showing overwriting of the time-axis waveform of the intensity of the RZ-DPSK light signal emitted from the light modulator in the case where the timing of the RZ modulation is early by 2 ps.
Fig. 10 is a characteristic diagram showing a time-axis waveform of the intensity of the RZ-DPSK light signal emitted from the light modulator in the case where the timing of the RZ modulation is late by 5 ps.
Fig. 11 is a characteristic diagram showing overwriting of the time-axis waveform of the intensity of the RZ-DPSK light signal emitted from the light modulator in the case where the timing of the RZ modulation is late by 5 ps.
Fig. 12 is a configuration block diagram showing another example of a related-art light modulating apparatus.

### DETAILED DESCRIPTION

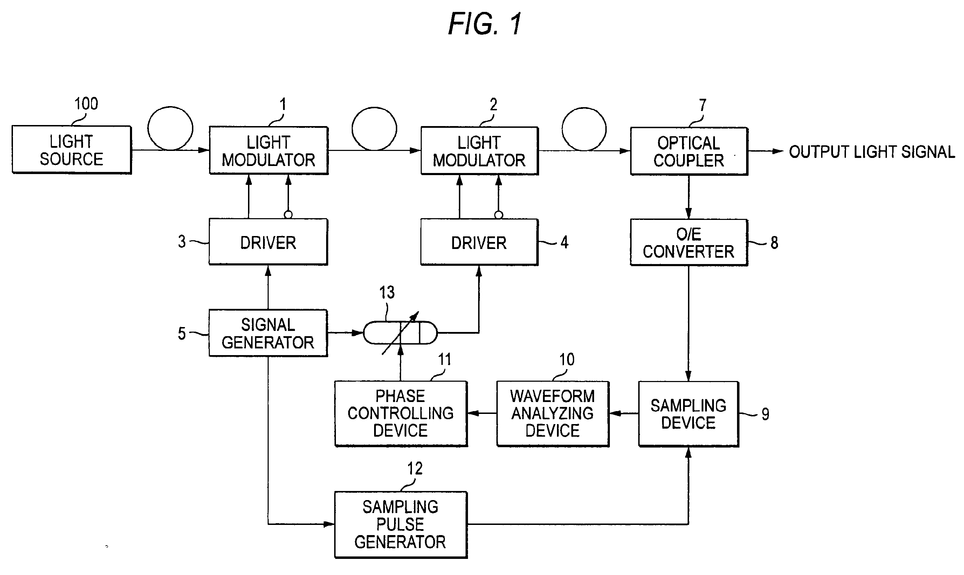

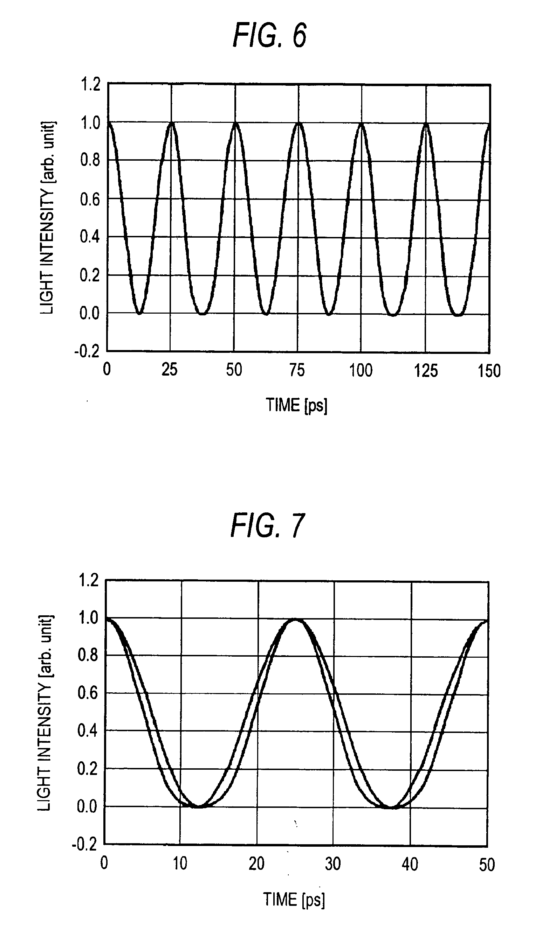

Hereinafter, the invention will be described in detail with reference to the accompanying drawings. Fig. 1 is a configuration block diagram showing an embodiment of the light modulating apparatus of the invention. In Fig. 1, 1, 2, 3, 4, 5, and 100 denote the same components as those of Fig. 12, 7 denotes an optical coupler which branches the modulated light emitted from the light modulator 2, 8 denotes an O/E (Optical/Electrical) converter which converts a light signal to an electric signal, and which is configured by a photodiode and the like, and 9 denotes a sampling device which samples the electric signal from the O/E converter 8. The reference numeral 10 denotes a waveform analyzing device which analyzes the data sampled by the sampling device 9, 11 denotes a phase controlling device which is controlled on the basis of the data analyzed by the waveform analyzing device 10, 12 denotes a sampling pulse generator which generates a sampling pulse for the sampling device 9, and 13 denotes a variable phase shifter which is controlled by the phase controlling device 11.

Light emitted from the light source 100 is incident on the incident end of the light modulator 1, and light emitted from the emission end of the light modulator 1 is incident on the incident end of the light modulator 2. Light emitted from the emission end of the light modulator 2 is incident on an incident end of the optical coupler 7, and an output light signal is emitted from one of emission ends of the optical coupler 7.

The transmission signal output terminal of the signal generator 5 is connected to the input terminal of the driver 3. The non-inverting output terminal of the driver 3 is connected to one of the RF .input terminals of the light modulator 1, and the inverting output terminal of the driver 3 is connected to the other RF input terminal of the light modulator 1.

The light quantity control signal output terminal of the signal generator 5 is connected to an input terminal of the variable phase shifter 13, and an output terminal of the variable phase shifter 13 is connected to the input terminal of the driver 4. The non-inverting output terminal of the driver 4 is connected to one of the RF input terminals of the light modulator 2, and the inverting output terminal of the driver 4 is connected to the other RF input terminal of the light modulator 2.

Light emitted from the other emission end of the optical coupler 7 is incident on the incident end of the O/E converter 8, and an output terminal of the O/E converter 8 is connected to a data input terminal of the sampling device 9. An output terminal of the sampling device 9 is connected to an input terminal of the waveform analyzing device 10, and an output terminal of the waveform analyzing device 10 is connected to an input terminal of the phase controlling device 11.

Furthermore, an output terminal of the phase controlling device 11 is connected to a control signal input terminal of the variable phase shifter 13. A sampling control signal output terminal of the signal generator 5 is connected to an input terminal of the sampling pulse generator 12, and an output terminal of the sampling pulse generator 12 is connected to a sampling pulse input terminal of the sampling device 9.

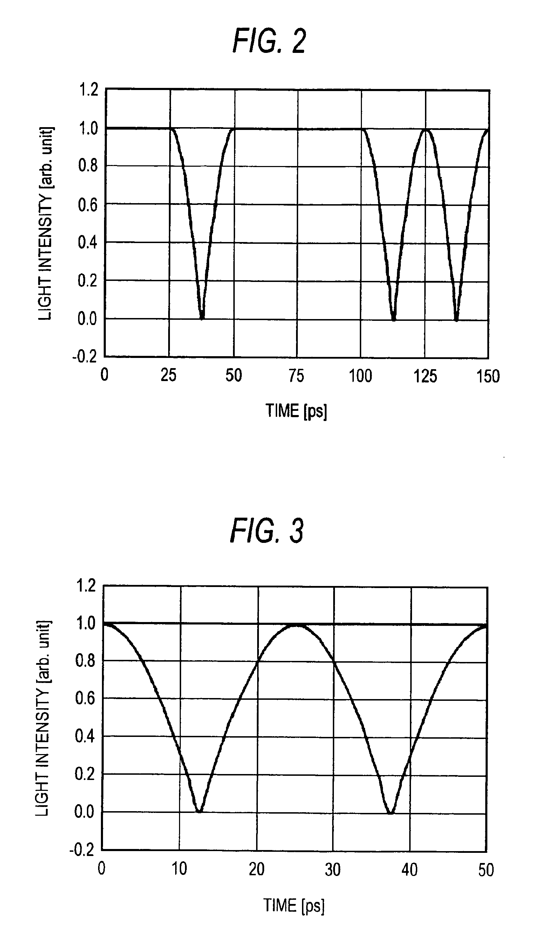

Hereinafter, the operation of the embodiment shown in Fig. 1 will be described with reference to Figs. 2 to 12. Fig. 2 is a characteristic diagram showing a time-axis waveform of the intensity of a DPSK light signal emitted from the light modulator 1, and Fig. 3 is a characteristic diagram showing overwriting of the time-axis waveform of the intensity of the DPSK light signal emitted from the light modulator 1.

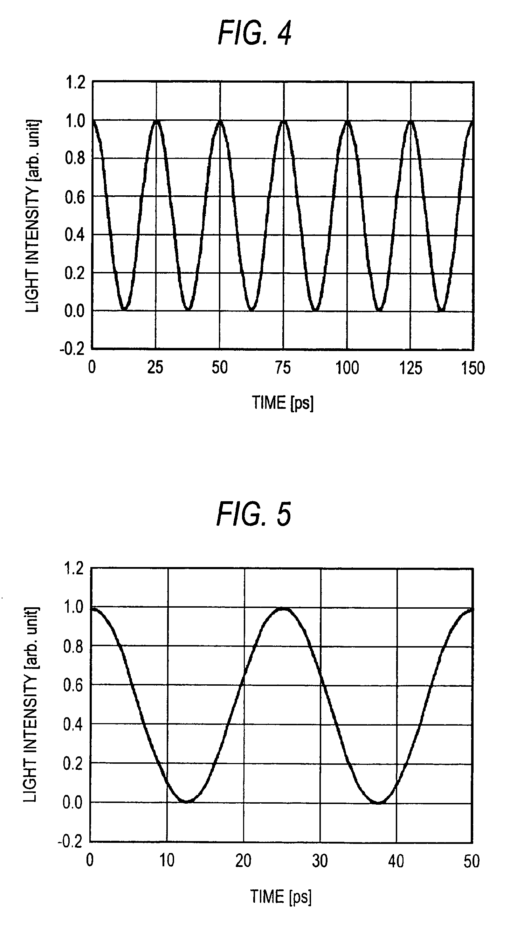

Fig. 4 is a characteristic diagram showing a time-axis waveform of the intensity of an RZ light signal, Fig. 5 is a characteristic diagram showing overwriting of the time-axis waveform of the intensity of the RZ light signal, Fig. 6 is a characteristic diagram showing a time-axis waveform of the intensity of an RZ-DPSK light signal emitted from the light modulator 2, and Fig. 7 is a characteristic diagram showing overwriting of the time-axis waveform of the intensity of the RZ-DPSK light signal emitted from the light modulator 2.

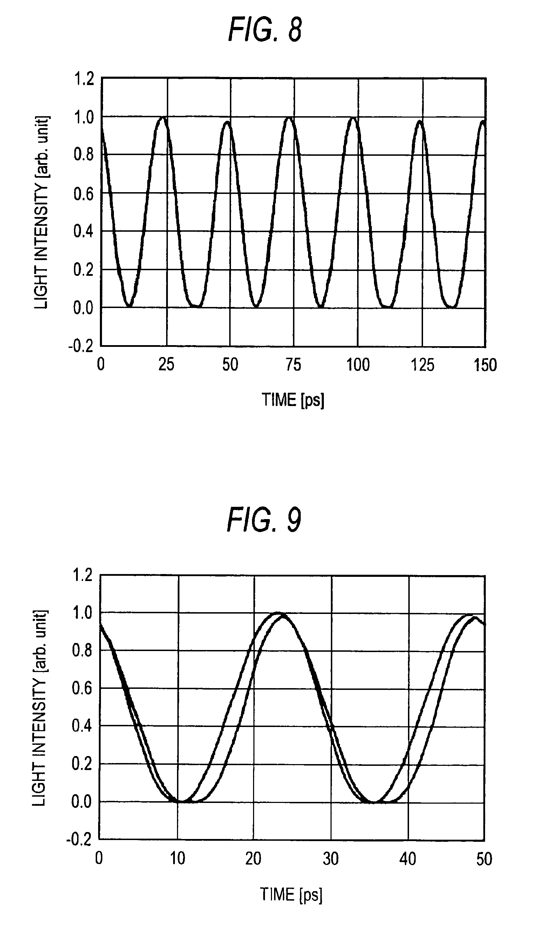

Fig. 8 is a characteristic diagram showing a time-axis waveform of the intensity of the RZ-DPSK light signal emitted from the light modulator 2 in the case where the timing of RZ modulation is early by 2 ps, and Fig. 9 is a characteristic diagram showing overwriting of the time-axis waveform of the intensity of the RZ-DPSK light signal emitted from the light modulator 2 in the case where the timing of the RZ modulation is early by 2 ps.

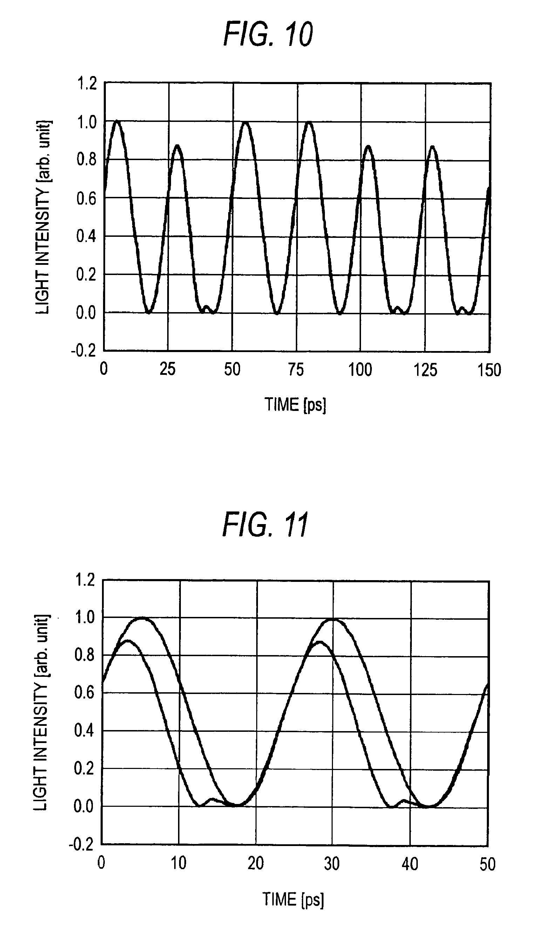

Fig. 10 is a characteristic diagram showing a time-axis waveform of the intensity of the RZ-DPSK light signal emitted from the light modulator 2 in the case where the timing of the RZ modulation is late by 5 ps, and Fig. 11 is a characteristic diagram showing overwriting of the time-axis waveform of the intensity of the RZ-DPSK light signal emitted from the light modulator 2 in the case where the timing of the RZ modulation is late by 5 ps.

The basic operation is substantially identical with that of the related-art example of Fig. 12. The embodiment is different in that the optical coupler 7, the O/E converter 8, the sampling device 9, the waveform analyzing device 10, the phase controlling device 11, and the sampling pulse generator 12 are added.

The RZ-DPSK light signal emitted from the light modulator 2 is branched off by the optical coupler 7, and the light signal is converted to an electric signal by the O/E converter 8. The converted electric signal is sampled by the sampling device 9. The sampling timing is generated by the sampling pulse generator 12 on the basis of a sampling control signal output from the signal generator 5.

Namely, a sweep is performed while times each of which is obtained by slightly changing the time period elapsed after the switching time of data of the transmission signal that is supplied from the signal generator 5 to the driver 3 are used sampling points. This technique is known in a DSO (Digital Storage Osilloscope).

From the obtained sampling data, the waveform is analyzed with using an image recognition technique. For example, the time-axis waveform of the intensity of the DPSK light signal by which information is transmitted at a rate of "1 bit" per "25 ps" is shown in Fig. 2.

In Fig. 2, in the portions where the light intensity remains "1.0" or is not changed, the light phase is continuous, and information of "0" is transmitted. In the portions where the light intensity is changed from "1.0" to "0.0" and again returned to "1.0", the light phase is changed by "π", and information of "1" is transmitted.

Fig. 3 shows overwritten waveforms (sometimes also called an eye pattern) with using a data switching time as a trigger point. In Fig. 3, repeated waveforms for every "50 ps" in Fig. 2 are overwritten.

Fig. 4 shows a time-axis waveform of the light intensity in the case where only RZ light modulation is performed. Fig. 5 shows an overwritten waveform of the waveform of Fig. 4. In Fig. 5, repeated waveforms for every "50 ps" in Fig. 4 are overwritten.

The waveform of the intensity of the RZ-DPSK modulated light is the product of the intensity waveform of the DPSK modulated light (Figs. 2 and 3) by that of the RZ modulated light (Figs. 4 and 5). Fig. 6 shows a time-axis waveform of the intensity of the RZ-DPSK light signal, and Fig. 7 shows an overwritten waveform of the waveform. In Fig. 7, repeated waveforms for every "50 ps" in Fig. 6 are overwritten.

In the overwritten waveform (Fig. 3) of the intensity of the DPSK modulated light, there is a binary portion. Therefore, also the overwritten waveform (Fig. 7) of the intensity of the RZ-DPSK modulated light which is a product with the overwritten waveform (Fig. 5) of the intensity of the RZ modulated light is binary. The waveforms of Figs. 6 and 7 show the case where the timings the RZ and DPSK modulations are optimum.

The time-axis waveform of the intensity of the RZ-DPSK light modulation in the case where the timing of the RZ modulation is early by 2 ps is shown in Fig. 8, and the overwritten waveform of the waveform is shown in Fig. 9. In Fig. 9, repeated waveforms for every "50 ps" in Fig. 8 are overwritten.

In Fig. 9, two traces in falling are substantially coincident with each other, and, in contrast, the distance between the two traces in rising is increasing. On the basis of a result of the sampling by the sampling device 9, therefore, the waveform analyzing device 10 obtains jitter at a rise of the waveform and that at a fall, and compares the jitters with each other.

If the jitter at the rise is larger than the jitter at the fall, the waveform analyzing device 10 determines that the timing of the RZ modulation is early, and controls the phase controlling device 11. Then, the phase controlling device 11 controls the variable phase shifter 13 so that the timing of the RZ modulation becomes later, whereby the timing of modulation is adjusted to an appropriate one.

If the jitter at the fall is larger than the jitter at the rise, the waveform analyzing device 10 determines that the timing of the RZ modulation is late, and controls the phase controlling device 11. Then, the phase controlling device 11 controls the variable phase shifter 13 so that the timing of the RZ modulation becomes earlier, whereby the timing of modulation is adjusted to an appropriate one.

The time-axis waveform of the intensity of the RZ-DPSK light modulation in the case where the timing of the RZ modulation is late by 5 ps is shown in Fig. 10, and the overwritten waveform of the waveform is shown in Fig. 11. In Fig. 11, repeated waveforms for every "50 ps" in Fig. 10 are overwritten.

Also in this case, the waveform analyzing device 10 compares jitter at a rise of a waveform with that at a fall, whereby the timing of the RZ modulation can be controlled. However, hereinafter a method in which the width of a valley of a waveform will be described.

In Fig. 10, it will be seen that peaks of a waveform are varied to be large or small. Furthermore, a valley next to a small peak which succeeds a large peak (maximum value) is always wide. Namely, there are the case where a valley immediately preceding a small peak which succeeds a large peak (maximum value) is wide, and the case where an immediately succeeding valley is wide. In the former case, when the timing of the RZ modulation is early, such a waveform is obtained. In the latter case, when the timing of the RZ modulation is late, such a waveform is obtained.

If a valley immediately preceding a small peak which succeeds a large peak (maximum value) is wide, therefore, the waveform analyzing device 10 determines that the timing of the RZ modulation is early, and controls the phase controlling device 11. Then, the phase controlling device 11 controls the variable phase shifter 13 so that the timing of the RZ modulation becomes later, whereby the timing of modulation is adjusted to an appropriate one.

If a valley immediately succeeding a small peak which succeeds a large peak (maximum value) is wide, the waveform analyzing device 10 determines that the timing of the RZ modulation is late, and controls the phase controlling device 11. Then, the phase controlling device 11 controls the variable phase shifter 13 so that the timing of the RZ modulation becomes earlier, whereby the timing of modulation is adjusted to an appropriate one.

As a result, the optical coupler 7 branches the output light signal emitted from the light modulator 2, the O/E converter 8 converts the light signal to the electric signal, the data sampled by the sampling device 9 are analyzed by the waveform analyzing device 10, and the variable phase shifter 13 is controlled by the phase controlling device 11 on the basis of a result of the analysis, whereby the timing between the light modulators is always adjusted. Therefore, a delay in the optical transmission path between light modulators caused by a temperature change or a change with age, or an electrical delay in a driver is adequately compensated, and high reliability can be maintained.

In the embodiment shown in Fig. 1, the case of the RZ-DPSK modulation has been described. However, the RZ-DPSK modulation is not always necessary. The invention can be applied to a case where two or more modulators are used.

For example, the RZ modulation, the CS-RZ modulation, the CSRZ-DPSK modulation, the (CS)RZ-DQPSK modulation, the (CS)RZ-DuoBinary modulation, and the like can be used.

In the embodiment shown in Fig. 1, after the DPSK modulation is performed, the RZ modulation is performed, whereby the RZ-DPSK modulated light is produced. The order of modulations is not restricted to this. After the RZ modulation is performed, the DPSK modulation may be performed, whereby the RZ-DPSK modulated light may be produced.

In the embodiment shown in Fig. 1, in response to the sampling start signal supplied from the signal generator, the sampling pulse generator generates the sampling pulse. However, it is not necessary to generate the sampling pulse on the basis of the sampling start signal. Alternatively, the sampling pulse may be generated on the basis of the transmission signal or the light quantity control signal.

In the embodiment shown in Fig. 1, the method in which jitter at a rise is compared with that at a fall, and that in which the widths of valleys respectively preceding and succeeding a small peak which succeeds a large peak (maximum value) are analyzed have been described as examples of wave analysis. Alternatively, a method in which the time between apexes of peaks of a waveform is analyzed, or that in which a waveform is Fourier transformed and analysis is performed on the basis of the spectrum intensity and phase information may be employed.

The method in which the time between apexes of peaks of a waveform is analyzed will be described with reference to Figs. 6, 8, and 10. When the timing of the RZ modulation is coincident, the apexes of peaks (maximum values) of a waveform in Fig. 6 are in the positions of scales of every "25 ps" in the time axis (abscissa), respectively. Specifically, the apexes of peaks (maximum values) of a waveform are in the positions of "0 ps", "25 ps", "50 ps", "75 ps", "100 ps", "125 ps", and "150 ps".

By contrast, when the timing of the RZ modulation is early, the apexes of peaks (maximum values) of a waveform in Fig. 8 are in the positions which lead by "2 ps" from the scales of every "25 ps" in the time axis (abscissa), respectively. Specifically, the apexes of peaks (maximum values) of a waveform are in the positions of "23 ps", "48 ps", "73 ps", "98 ps", "123 ps", and "148 ps".

In this case, the waveform analyzing device 10 determines that the timing of the RZ modulation is early, and controls the phase controlling device 11. Then, the phase controlling device 11 controls the variable phase shifter 13 so that the timing of the RZ modulation becomes later, whereby the timing of modulation is adjusted to an appropriate one.

Similarly, when the timing of the RZ modulation is late, the apexes of peaks (maximum values) of a waveform in Fig. 10 are in the positions which lag by "5 ps" from scales of every "25 ps" in the time axis (abscissa), respectively. Specifically, the apexes of peaks (maximum values) of a waveform are in the positions of "5 ps", "30 ps", "55 ps", "80 ps", "105 ps", "130 ps", and "155 ps".

In this case, the waveform analyzing device 10 determines that the timing of the RZ modulation is late, and controls the phase controlling device 11. Then, the phase controlling device 11 controls the variable phase shifter 13 so that the timing of the RZ modulation becomes earlier, whereby the timing of modulation is adjusted to an appropriate one.

Next, the method in which a waveform is Fourier transformed and analysis is performed on the basis of the spectrum intensity and phase information will be described. When the timing of the RZ modulation is deviated, the intensity of the main spectrum is smaller than that in the case where the timing is coincident. When the timing of the RZ modulation is early, the phase of the principal sideband leads with respect to that of the main spectrum, and, when the timing of the RZ modulation is late, lags.

With using the characteristics, the waveform analyzing device 10 Fourier transforms the data from the sampling device 9. When the spectrum intensity is smaller than that in the case where the timing of the RZ modulation is coincident, and the phase leads, the device determines that the timing of the RZ modulation is early, and controls the phase controlling device 11. Then, the phase controlling device 11 controls the variable phase shifter 13 so that the timing of the RZ modulation becomes later, whereby the timing of modulation is adjusted to an appropriate one.

Similarly, the waveform analyzing device 10 Fourier transforms the data from the sampling device 9, and, when the spectrum intensity is smaller than that in the case where the timing of the RZ modulation is coincident, and the phase lags, the device determines that the timing of the RZ modulation is late, and controls the phase controlling device 11. Then, the phase controlling device 11 controls the variable phase shifter 13 so that the timing of the RZ modulation becomes earlier, whereby the timing of modulation is adjusted to an appropriate one.

As a result, the optical coupler 7 branches the output light signal emitted from the light modulator 2, the O/E converter 8 converts the light signal to the electric signal, the data sampled by the sampling device 9 are analyzed by the waveform analyzing device 10, and the variable phase shifter 13 is controlled by the phase controlling device 11 on the basis of a result of the analysis, whereby the timing between the light modulators is always adjusted. Therefore, a delay in the optical transmission path between light modulators caused by a temperature change or a change with age, or an electrical delay in a driver is adequately compensated, and high reliability can be maintained.

In addition to the above-described methods, a method in which the amount of the timing deviation between the light modulators is directly calculated from a result of the waveform analysis, and the timing is controlled, or a control method in which the phase controlling device 11 previously determines the amount of control on the variable phase shifter 13, and timings are caused to approach asymptotically to each other on the basis of information of the directionality of the timing deviation may be possible.

Furthermore, a method may be possible in which the phase controlling device 11 gives a control value such as a dither to the variable phase shifter 13, a waveform response to the control value is sampled by the sampling device 9, and the direction and amount of the deviation are detected from a result of an analysis by the waveform analyzing device 10, thereby controlling the timing.

In the embodiment shown in Fig. 1, for the sake of simplicity of the description, the signal generator and the sampling pulse generator are described to be separately disposed. Alternatively, the signal generator and the sampling pulse generator may be integrated with each other to be configured as signal generating section.

In the embodiment shown in Fig. 1, for the sake of simplicity of the description, the light modulators and the drivers are described to be separately disposed. Alternatively, a light modulator and a driver may be integrated with each other to be configured as light modulating section.

In the embodiment shown in Fig. 1, for the sake of simplicity of the description, the optical coupler and the O/E converter are described to be separately disposed. Alternatively, the optical coupler and the O/E converter may be integrated with each other to be configured as branching section.

In the embodiment shown in Fig. 1, for the sake of simplicity of the description, the sampling device, the waveform analyzing device, and the phase controlling device are described to be separately disposed. Alternatively, the sampling device, the waveform analyzing device, and the phase controlling device may be integrated with each other to be configured as analysis controlling section.
While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A light modulating apparatus which is to be used in a transmission system using wavelength division multiplexing, said apparatus comprising:
a signal generating section for producing a transmission signal, a light quantity control signal, and a sampling pulse;
a first light modulating section for modulating light emitted from a light source, on the basis of the transmission signal;
a variable phase shifter which changes a phase of the light quantity control signal;
a second light modulating section for modulating a light signal emitted from said first light modulating section, on the basis of an output of said variable phase shifter;
a branching section for branching a light signal emitted from said second light modulating section, into an output light signal and an electric signal; and
an analysis controlling section for sampling the electric signal in synchronization with the sampling pulse, controlling said variable phase shifter on the basis of sampled data, and adjusting a timing of the modulation in said second light modulating section.

2. A light modulating apparatus which is to be used in a transmission system using wavelength division multiplexing, said apparatus comprising:
a signal generating section for producing a transmission signal, a light quantity control signal, and a sampling pulse;
a first light modulating section for modulating light emitted from a light source, on the basis of the light quantity control signal;
a variable phase shifter which changes a phase of the transmission signal;
a second light modulating section for modulating a light signal emitted from said first light modulating section, on the basis of an output of said variable phase shifter;
a branching section for branching a light signal emitted from said second light modulating section, into an output light signal and an electric signal; and
an analysis controlling section for sampling the electric signal in synchronization with the sampling pulse, controlling said variable phase shifter on the basis of sampled data, and adjusting a timing of the modulation in said second light modulating section.

3. A light modulating apparatus according to claim 1 or 2, wherein said signal generating section includes:
a signal generator which produces the transmission signal, the light quantity control signal, and a sampling start signal; and
a sampling pulse generator which generates the sampling pulse on the basis of the sampling start signal.

4. A light modulating apparatus according to any one of claims 1 to 3, wherein each of said first and second light modulating section includes:
a driver which amplifies an input signal; and
a light modulator which is driven by said driver, and which modulates light.

5. A light modulating apparatus according to any one of claims 1 to 4, wherein said branching section includes:
an optical coupler which branches an incident light signal, and which emits one emitted light as the output light signal; and
an optical/electrical converter which converts the other emitted light of said optical coupler to the electric signal.

6. A light modulating apparatus according to any one of claims 1 to 5, wherein said analysis controlling section includes:
a sampling device which samples an input signal in synchronization with the sampling pulse;
a phase controlling device which controls said variable phase shifter; and
a waveform analyzing device which controls said phase controlling device on the basis of the data sampled by said sampling device, and which adjusts the timing of the modulation in said second light modulating section.

7. A light modulating apparatus according to claim 3, wherein said sampling pulse generator generates the sampling pulse on the basis of the transmission signal.

8. A light modulating apparatus according to claim 3, wherein said sampling pulse generator generates the sampling pulse on the basis of the light quantity control signal.

9. A light modulating apparatus according to claim 6, wherein said waveform analyzing device
compares jitter at a rise of a waveform obtained on the basis of the data sampled by said sampling device, with jitter at a fall,
if the jitter at the rise is larger than the jitter at the fall, determines that the timing of the modulation in said second light modulating section is early, and controls said phase controlling device so that the timing of the modulation becomes later, and
if the jitter at the fall is larger than the jitter at the rise, determines that the timing of the modulation in said second light modulating section is late, and controls said phase controlling device so that the timing of the modulation becomes earlier.

10. A light modulating apparatus according to claim 6, wherein said waveform analyzing device
if a valley immediately preceding a small peak which succeeds a peak of a maximum value of a waveform obtained on the basis of the data sampled by said sampling device is wider than a valley in a case of a coincident timing of the modulation, determines that the timing of the modulation in said second light modulating section is early, and controls said phase controlling device so that the timing of the modulation becomes later, and
if a valley immediately succeeding a small peak which succeeds a peak of a maximum value of a waveform obtained on the basis of the data sampled by said sampling device is wider than a valley in a case of a coincident timing of the modulation, determines that the timing of the modulation in said second light modulating section is late, and controls said phase controlling device so that the timing of the modulation becomes earlier.

11. A light modulating apparatus according to claim 6, wherein said waveform analyzing device
obtains a time of an apex of a peak of a waveform obtained on the basis of the data sampled by said sampling device, compares the time with a time in a case of a coincident timing of the modulation in said second light modulating section,
if the time of the apex of the peak of the waveform is earlier, determines that the timing of the modulation in said second light modulating section is early, and controls said phase controlling device so that the timing of the modulation becomes later, and
if the time of the apex of the peak of the waveform is later, determines that the timing of the modulation in said second light modulating section is late, and controls said phase controlling device so that the timing of the modulation becomes earlier.

12. A light modulating apparatus according to claim 6, wherein said waveform analyzing device
Fourier transforms the data sampled by said sampling device, obtains a spectrum intensity and phase information, compares the spectrum intensity and phase information with a spectrum intensity and phase information in a case of a coincident timing of the modulation in said second light modulating section,
if an intensity of a main spectrum is small and a principal sideband leads in phase, determines that the timing of the modulation in said second light modulating section is early, and controls said phase controlling device so that the timing of the modulation becomes later, and
if the intensity of the main spectrum is small and the principal sideband lags in phase, determines that the timing of the modulation in said second light modulating section is late, and controls said phase controlling device so that the timing of the modulation becomes earlier.
